# EUROPEAN PATENT SPECIFICATION

(11) **EP 0 392 721 B1**
(45) Date of publication and mention of the grant of the patent: **16.06.1993**
(21) Application number: 90303541.8
(22) Date of filing: 03.04.1990
(51) Int. Cl.: B60R 1/06

(54) **Exterior mirror for motor vehicle**
Aussenrückblickspiegel für ein Kraftfahrzeug
Rétroviseur extérieur de véhicule à moteur

(30) Priority: 13.04.1989 GB 8908381
(43) Date of publication of application: 17.10.1990
(73) Proprietor: BRITAX (GECO) S.A., F-77981 Saint Fargeau Ponthierry (FR)
(72) Inventor: Harry, Jean-Michael, F-77210 Avon (FR); Cluet, Yves, F-77250 Veneux les Sablons (FR)
(74) Representative: Hollinghurst, Antony

(56) References cited:
- EP-A- 0 340 944
- DE-A- 3 605 945
- PATENT ABSTRACTS OF JAPAN vol. 9, no. 238 (M-416)(1961) 25 September 1985, & JP-A-60 92132 (NITSUSAN SHIYATAI K.K.) 23 May 1985,
- PATENT ABSTRACTS OF JAPAN vol. 11, no. 263 (M-619)(2710) 26 August 1987, & JP-A-62 64648 (ICHICOH IND LTD) 23 March 1987,
- PATENT ABSTRACTS OF JAPAN vol. 7, no. 271 (M-260)(1416) 03 December 1983, & JP-A-58 149836 (ICHICO KOGYO K.K.) 06 September 1983,

## Description

This invention relates to an exterior mirror for a motor vehicle of the type having a base member adapted to be mounted on a vehicle body, a housing containing a reflective member and having an end adapted, in nornal use, to abut against the base member, a link member pivotally connected at a first end to the base member for angular movement about a first axis and pivotally connected at a second end to the housing for relative angular movement about a second axis parallel to the first axis, and a spring catch arranged to resiliently resist separation between the housing and the base member and to release when such separation exceeds a predetermined value. An exterior mirror of this type is disclosed in DE-A-3605945.

According to the invention, in a mirror of the foregoing type, the spring catch comprises a pivotally mounted catch plate having an open-ended slot arranged to receive a detent formation and a spring arranged to angularly bias the catch plate about its pivotal mounting so that initial movement of the housing relative to the base member causes the detent formation to initiate angular movement of the catch plate against the spring to bring the slot into line with the direction of movement of the detent formation.

Preferably the line of action of the spring is arranged to go over-centre so that the slot remains in alignment with the direction of movement of the detent formation after the detent formation has separated therefrom.

JP-A-6092132 discloses an exterior mirror for a motor vehicle of the type in which a housing containing a reflective member can be folded flat against the vehicle body in order to reduce the overall width of the vehicle e.g. when it is parked. In normal use, the housing is held against its base member by a pivotally mounted catch plate which can be released only by manually actuable release means.

An embodiment of the invention will now be described, by way of example, with reference to the accompanying drawings in which:
Figure 1 is a partially broken away plan view of the mirror in accordance with a first embodiment of the invention with the housing in its normal position relative to the base member;
Figure 2 is an exploded view showing the link member and spring loaded catches of the mirror shown in Figure 1;
Figure 3 is a partially broken away view, similar to Figure 1 but showing the housing displaced forwardly a short distance from its position of normal use;
Figure 4 is a partially broken away plan view, similar to Figure 3 showing the housing displaced forwardly to its maximum extent;
Figure 5 is a partially broken away plan view, similar to Figure 3 but showing the housing displaced rearwardly a short distance from its normal position;
Figure 6 is a partially broken away plan view, similar to Figure 5, but showing the housing displaced rearwardly to its maximum extent;
Figure 7 is a partially broken away plan view of the mirror in accordance with a second embodiment of the invention with the housing in its normal position relative to the base member;
Figure 8 is a partially broken away plan view, similar to Figure 7, but showing the housing of the second embodiment displaced rearwardly to its maximum extent; and
Figure 9 is a partially broken away plan view, similar to Figure 7 showing the housing of the second embodiment displaced forwardly to its maximum extent.

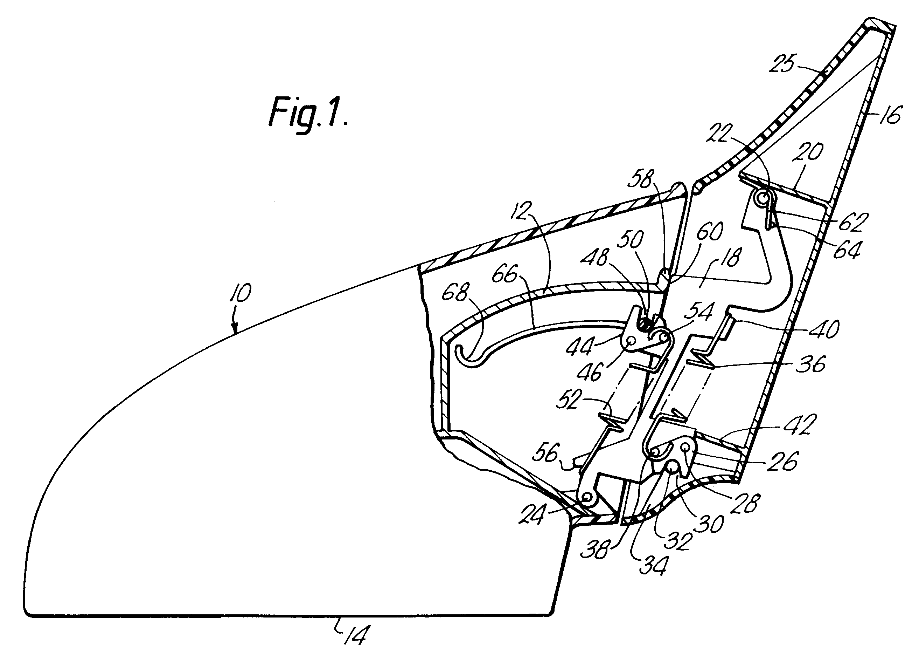

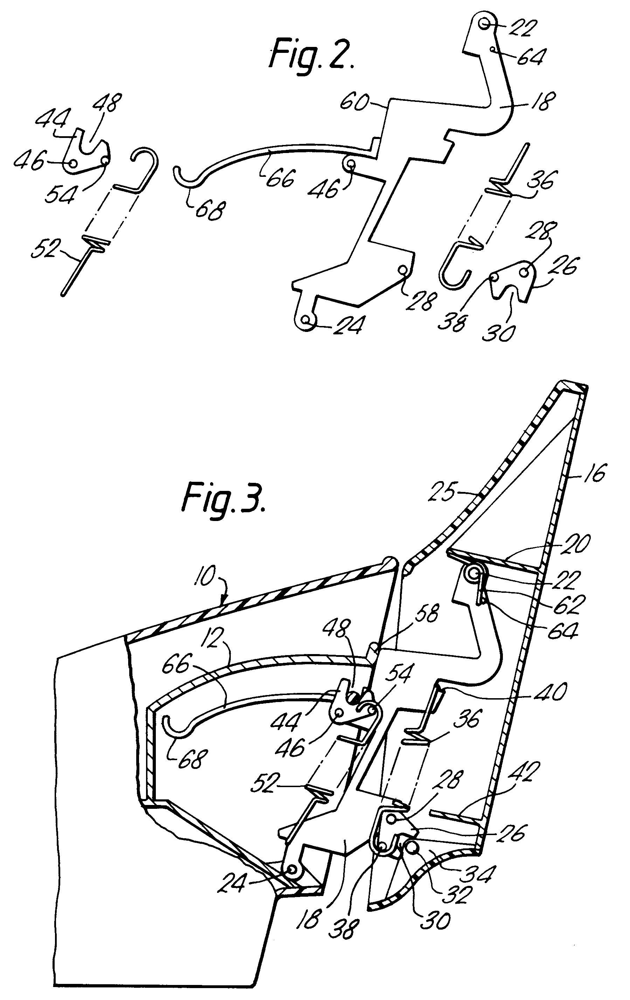

Referring to Figure 1, a rearview mirror has a plastics housing 10 containing an end plate 12 of rigid material and a reflective member (not shown) which, in use, is viewed from the side 14, and a base member 16, of rigid material, arranged to abut against a motor vehicle door. The housing 10 is mounted on the base member 16 by a link 18 (see also Figure 2) which has one end connected to a rib 20 on the base member 16 by a pivot pin 22 and its other end connected to the housing end plate 12 by a pivot pin 24, the axes of the pivot pins 22 and 24 being parallel to one another. The base member 16 has a plastics cover 25.

When the housing 10 is in its normal position, with its inboard edge closely adjacent to the plastics cover 25 of the base member 16, as illustrated in Figure 1, the link 18 is kept at the required orientation relative to the base member 16 by a catch plate 26 which is pivotally mounted on the link 18 by a pivot pin 28 and which has an open-ended slot 30 engaging with a detent peg 32 mounted on a rib 34 forming part of the base member 16. A tension spring 36, acting between a peg 38 on the catch plate 26 and an abutment 40 on the link 18, tends to bias the catch plate 26 in the clockwise direction, as viewed in Figure 1, thus causing it to tend to pull the link 18 inwardly so that it abuts against a third rib 42 on the base member 16.

A second catch plate 44 is also pivotally mounted on the link 18 by a second pivot pin 46, and has an open-ended slot 48 which engages with a detent peg 50 secured to the housing 10. A second tension spring 52 acts between a peg 54 on the second catch plate 44 and an abutment 56 on the link 18 so as to tend to bias the catch plate 46 in the clockwise direction (as viewed in Figure 1, thereby holding a rib 58 on the housing end plate 12 in abutment with a shoulder 60 on the link 18.

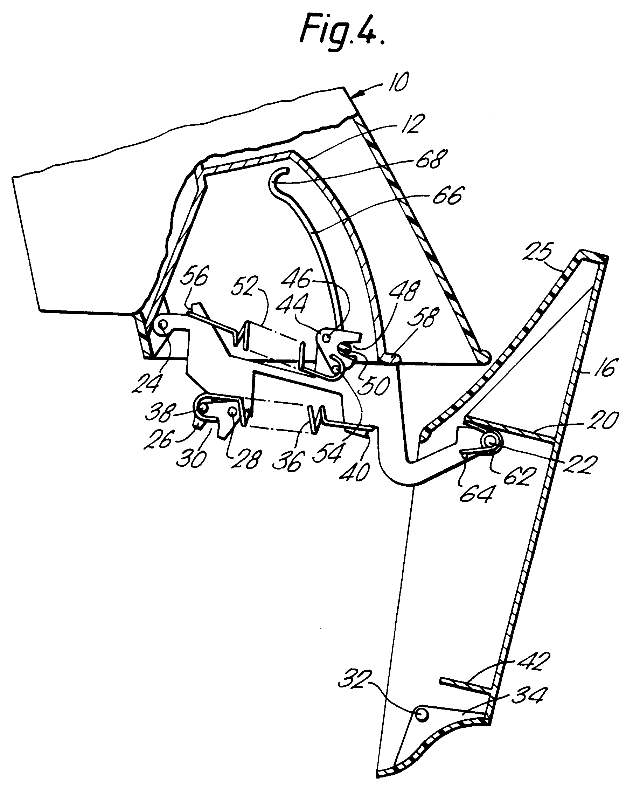

If the housing 10 is subject to a forwardly acting displacement force, the first catch plate 26 moves in a counterclockwise direction against the action of the tension spring 36. This movement is resisted by a couple exerted by the spring 36 which decreases progressively as the line of action of the spring 36 moves closer to the pivot pin 28. The orientation of the slot 30 in the catch plate 26 is such that the detent peg 32 can disengage therefrom when the line of action of the spring 36 has moved to the right hand side of the peg 28 (as illustrated in the drawings), the position of the mechanism then being as illustrated in Figure 3. The only force resisting further forward movement of the housing 10 is that provided by a relatively light spring 62 which is wound round the pivot pin 22 and has one arm engaging with the rib 20 on the base member 16 and the other with a peg 64 on the link member 18. The housing can be displaced fully forwardly to the position illustrated in Figure 4.

If the forward displacing force is removed, the spring 62 will return the housing 10 to the position illustrated in Figure 3. It will usually be necessary for a slight manual force to be applied in order to cause angular movement of the first catch plate 26 to bring the line of action of the spring 36 to the left hand side of the pivot pin 28. Thereafter, the first tension spring 36 returns the housing 10 to the position illustrated in Figure 1.

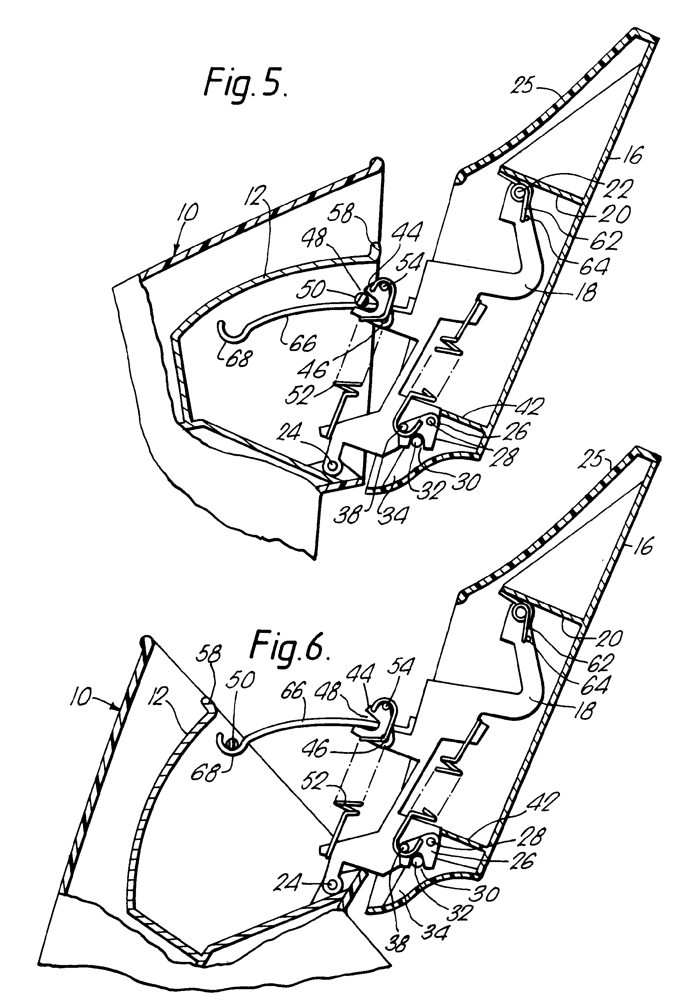

If the housing 10 is subject to a rearward displacing force, the second catch plate 44 first pivots in a counterclockwise direction (as illustrated), against the action of the second tension spring 52 until it reaches the position shown in Figure 5 in which the line of action of the spring 52 has moved to the left hand side of the pivot pin 46 and the slot 48 is oriented to allow the detent peg 50 to move out of engagement. Further rearward displacement of the housing 10 causes the detent peg 50 to move along a leaf spring 66 which is secured to the link 18, until the detent peg 50 engages in a hook formation 68 in the end of the leaf spring 66, as illustrated in Figure 6. This holds the housing 10 in a parked position in which it is displaced rearwardly to its maximum extent. A slight manual force is sufficient to disengage the detent peg 50 from the hook formation 68 and restore the housing to its normal position illustrated in Figure 1, the final stages of such restoring movement being assisted by the second tension spring 52.

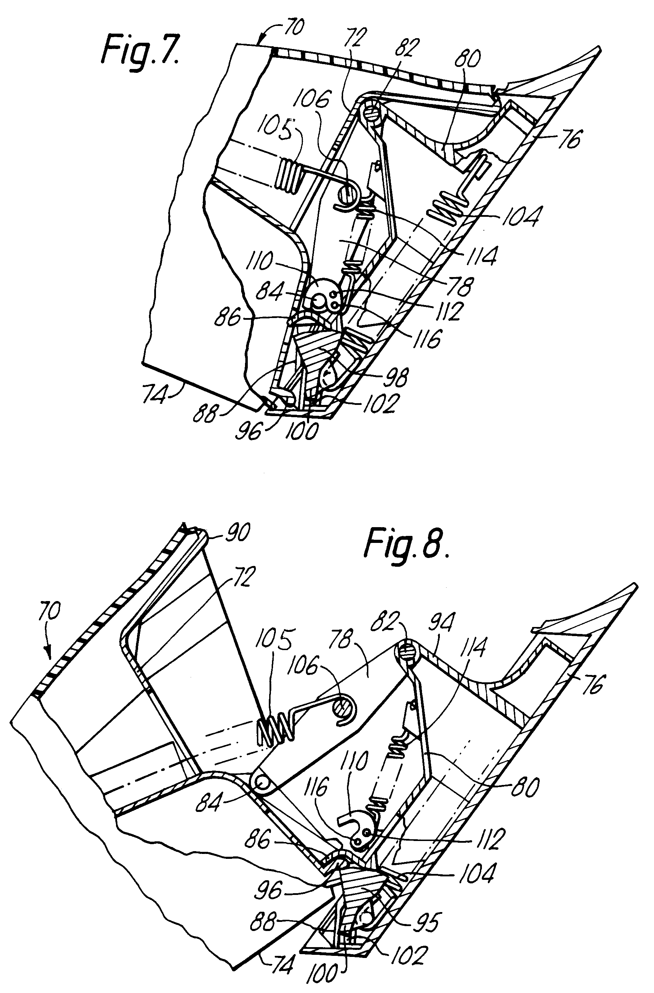

Figures 7 to 9 illustrate another embodiment of the invention in which a single catch plate is used to resist both forward and rearward displacement. The mirror illustrated in Figures 7 to 9 has a plastics housing 70 containing an end plate 72 of rigid material and reflective member (not shown) which, in use, is viewed from the side 74, and a base member 76 arranged to abut against a motor vehicle door. The housing 70 is mounted on the base member 76 by a link 78 which has one end connected to a support member 80 on the base member 76 by a pivot pin 82, The other end of the link 78 is connected to the housing end plate 72 by a pivot pin 84.

The support member 80 has a hook-like stop formation 86 at its rear end. A cam flange 88 extends from the rear end of the base member 76 to the stop formation 86 but is located below the plane on which the sectional view of the drawings are taken. A similar flange (not shown) is located above such plane in a symmetrical location relative to the centre line of the support member 80.

The end plate 72 of the mirror housing 70 has a first abutment edge 90 arranged to engage with a cam surface 94 formed on the support member 80 between its front end and the pivot pin 82. At its rear end, the plate 72 has a second abutment edge 96 adapted to engage with the cam flange 88 on the base member 76.

A pawl 98 has an integrally moulded pivot pin at one end 100 which engages in a slot 102 below the flange 88 and is biased towards the front of the mirror by a tension spring 104. When the housing 70 pivots rearwardly from the position shown in Figure 7 to the position shown in Figure 8, the second abutment edge 96 rides over the pawl 98 which then retains the housing 70 in its displaced position, against a restoring force provided by a spring 105 which extends from an attachment point in the interior of the housing 70 to a peg 106 on the link 78. In order to return the housing 70 to its position shown in Figure 7, sufficient force must be applied to displace the pawl 98 against the action of the spring 104. This is described in more detail in patent specification EP-A-0340944 (published with the date of 08.11.1989).

In accordance with the invention, a catch plate 110 is pivotally on a pin 112 secured to the member 80. A tension spring 114 is attached to a peg 116 on the catch plate 110. When the housing 70 is illustrated in the position shown in Figure 7, the line of action of the spring 114 is closer to the base member 76 than is the pivot pin 112 with the result that the catch plate is biased in a counter-clockwise direction so as to engage with the pivot pin 84 which couples the link 78 to the housing end plate 72.

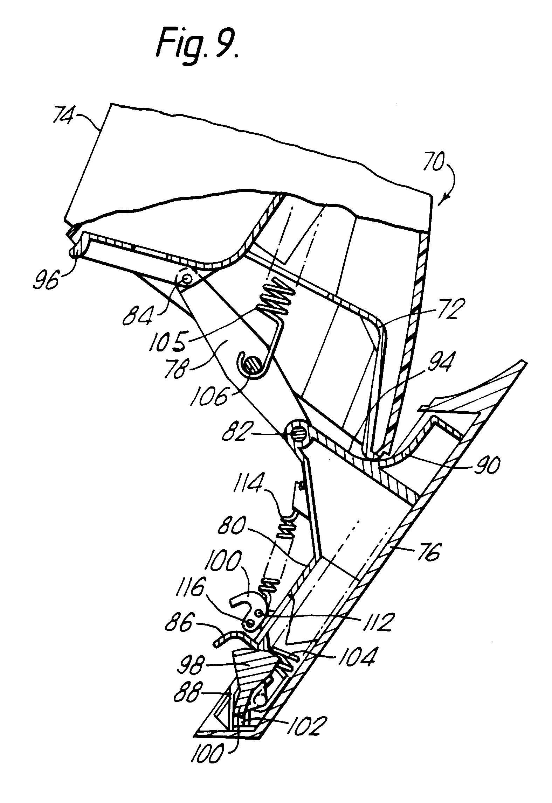

If a sufficient forward or rearward displacing force is applied to the housing 70 to overcome the action of the spring 114, the catch plate 110 pivots in a clockwise direction until the line of action of the spring 114 is further from the base 76 than is the pivot pin 112 whereupon the catch plate 110 snaps over into the position illustrated in Figures 8 and 9. The spring 114 retains the catch plate 110 in this position until the housing is restored to the position illustrated in Figure 7. Accordingly, the provision of the catch plate 110 enables the spring 114 to exert a smaller force than the corresponding spring of the mirror described in EP-A-0340944.

## Claims

1. An exterior mirror for a motor vehicle, having a base member (16, 76) adapted to be mounted on a vehicle body, a housing (10, 70) containing a reflective member and having an end (12, 72) adapted, in nornal use, to abut against the base member (16, 76), a link member (18, 78) pivotally connected at a first end to the base member (16, 76) for angular movement about a first axis (22, 82) and pivotally connected at a second end to the housing (10, 70) for relative angular movement about a second axis (24, 84) parallel to the first axis (22, 82), and a spring catch (26, 44, 110) arranged to resiliently resist separation between the housing (10, 70) and the base member (16, 76) and to release when such separation exceeds a predetermined value, characterised in that the spring catch comprises a pivotally mounted catch plate (26, 44, 110) having an openended slot (30, 48) arranged to receive a detent formation (32, 50, 84) and a spring (36, 52, 114) arranged to angularly bias the catch plate (26, 44, 110) about its pivotal mounting so that initial movement of the housing (10, 70) relative to the base member (16, 76) causes the detent formation (32, 50, 84) to initiate angular movement of the catch plate (26, 44, 110) against the spring (36, 52, 114) to bring the slot (30, 48) into line with the direction of movement of the detent formation (32, 50, 84).

2. An exterior mirror according to claim 1, wherein the line of action of the spring (36, 52, 114) is arranged to go over-centre so that the slot (30, 48) remains in alignment with the direction of movement of the detent formation (32, 50, 84) after the detent formation (32, 50, 84) has separated therefrom.

3. An exterior mirror according to claim 1 or 2, wherein the catch plate (26) is arranged to engage with the detent formation (32) so as to couple the first end of the link member (18) to the base member (16).

4. An exterior mirror according to claim 3, wherein a second catch plate (44) is arranged to engage with a second detent formation (50) so as to couple the second end of the link member (18) to the housing (10).

5. An exterior mirror according to claim 1 or 2, wherein the catch plate (110) is arranged to engage with the detent formation (84) so as to couple the housing (70) directly to the base member (76).

## Patentansprüche

1. Außenspiegel für ein Motorfahrzeug, mit einem Basisglied (16, 76), welches dazu befähigt ist, an einem Fahrzeugkörper befestigt zu werden, einem Gehäuse (10, 70), welches ein reflektierendes Element enthält sowie ein Ende (12, 72) aufweist, welches bei normalem Gebrauch dazu befähigt ist, gegen das Basisglied (16, 76) zum Anschlag zu gelangen, einem Verbindungselement (18, 78), welches zum Zwecke einer Winkelbewegung um eine erste Achse (22, 82) an einem ersten Ende mit dem Basisglied (16, 76) in schwenkbarer Weise verbunden ist und zum Zwecke einer relativen Winkelbewegung um eine zweite Achse (24, 84) an einem zweiten Ende mit dem Gehäuse (10, 70) in schwenkbarer Weise verbunden ist, wobei die zweite Achse (24, 84) parallel zu der ersten Achse (22, 82) gerichtet ist, sowie mit einem Feder-Sperrhaken (26, 44, 110), welcher in der Weise angeordnet ist, daß er einer Trennung zwischen dem Gehäuse (10, 70) und dem Basisglied (16, 76) in federnder Weise widersteht und daß er sich löst, falls eine solche Trennung einen vorgegebenen Wert überschreitet, **dadurch gekennzeichnet**, daß der Feder-Sperrhaken aufweist: eine drehbar angeordnete Arretierplatte (26, 44, 110) mit einer in der Weise ausgebildeten, offenen Kerbe (30, 48), daß diese eine Sperrvorrichtung (32, 50, 84) aufnimmt, und eine Feder (36, 52, 114), welche in der Weise angeordnet ist, daß sie die Arretierplatte (26, 44, 110) um deren als Drehpunkt dienende Befestigungsstelle in winkeliger Weise vorspannt, so daß eine Anfangsbewegung des Gehäuses (10, 70) relativ zu dem Basisglied (16, 76) die Sperrvorrichtung (32, 50, 84) dazu veranlaßt, eine winkelige Bewegung der Arretierplatte (26, 44, 110) gegen die Feder (36, 52, 114) einzuleiten, um die Kerbe (30, 48) in Ausrichtung mit der Bewegungsrichtung der Sperrvorrichtung (32, 50, 84) zu bringen.

2. Außenspiegel nach Anspruch 1, bei welchem die Wirkungslinie der Feder (36, 52, 114) in der Weise über ihre Mittelstellung hinaus in eine Endstellung bewegbar ist, daß die Kerbe (30, 48) in Ausrichtung mit der Bewegungsrichtung der Sperrvorrichtung (32, 50, 84) verbleibt, nachdem die Sperrvorrichtung (32, 50, 84) von ihr (d.h. der Kerbe) getrennt worden ist.

3. Außenspiegel nach Anspruch 1 oder 2, bei welchem die Arretierplatte (26) in der Weise angeordnet ist, daß sie mit der Sperrvorrichtung (32) in Eingriff gelangt, so daß das erste Ende des Verbindungselementes (18) mit dem Basisglied (16) gekoppelt wird.

4. Außenspiegel nach Anspruch 3, bei welchem eine zweite Arretierplatte (44) in der Weise angeordnet ist, daß sie mit einer zweiten Sperrvorrichtung (50) in Eingriff gelangt, so daß das zweite Ende des Verbindungselementes (18) mit dem Gehäuse (10) gekoppelt wird.

5. Außenspiegel nach Anspruch 1 oder 2, bei welchem die Arretierplatte (110) in der Weise angeordnet ist, daß sie mit der Sperrvorrichtung (84) in Eingriff gelangt, so daß das Gehäuse (70) unmittelbar mit dem Basisglied (76) gekoppelt wird.

## Revendications

1. Un rétroviseur extérieur pour véhicule automobile, comprenant un élément en forme de socle (16, 76) agencé pour être monté sur la caisse d'un véhicule, un boîtier (10, 70) contenant un élément réflecteur et dont une extrémité (12, 72) est agencée, en service normal, pour venir en butée contre le socle (16, 76), un élément formant biellette (18, 78), monté à rotation à une extrémité sur le socle (16, 76) pour effectuer un déplacement angulaire autour d'un premier axe (22, 82) et monté à rotation, à sa deuxième extrémité, sur le boîtier (10, 70) pour effectuer un déplacement angulaire relatif autour d'un deuxième axe (24, 84), parallèle au premier axe (22, 82), et un arrêtoir à ressort (26, 44, 110), agencé pour résister élastiquement à la séparation entre le boîtier (10, 70) et le socle (16, 76) et pour se déclencher lorsque cette séparation dépasse une valeur prédéterminée, caractérisé en ce que l'arrêtoir à ressort comprend une plaque d'arrêtoir montée à rotation (26, 44, 110) pourvue d'une fente ouverte (30, 48) agencée pour recevoir des moyens formant détente (32, 50, 84) et un ressort (36, 52, 114), agencé pour solliciter angulairement la plaque d'arrêtoir (26, 44, 110) autour de son support tournant, de manière qu'un déplacement initial du boîtier (10, 70) par rapport au socle (16, 76) provoque l'amorce, par les moyens de détente (32, 50, 84), d'un déplacement angulaire de la plaque arrêtoir (26, 44, 110) contre le ressort (36, 52, 114), pour amener la fente (30, 48) dans l'alignement de la direction de déplacement des moyens formant détente (32, 50, 84).

2. Un rétroviseur extérieur selon la revendication 1, dans lequel la ligne d'action du ressort (36, 52, 114) est agencée pour un fonctionnement à détente brusque, de manière que la fente (30, 48) reste dans l'alignement de la direction de déplacement des moyens de détente (32, 50, 84), après que les moyens de détente (32, 50, 84) se sont séparés de celle-ci.

3. Un rétroviseur extérieur selon la revendication 1 ou 2, dans lequel la plaque arrêtoir (26) est agencée pour venir en prise sur les moyens de détente (32) de manière à accoupler la première extrémité de la biellette (18) au socle (16).

4. Un rétroviseur extérieur selon la revendication 3, dans lequel une deuxième plaque arrêtoir (44) est agencée pour venir en prise sur des deuxièmes moyens de détente (50) pour accoupler la deuxième extrémité de la biellette (18) au boîtier (10).

5. Un rétroviseur extérieur selon la revendication 1 ou 2, dans lequel la plaque arrêtoir (110) est agencée pour venir en prise sur les moyens de détente (84) de manière à accoupler directement le boîtier (70) au socle (76).
